# EUROPEAN PATENT APPLICATION

(11) **EP 4 474 347 A1**
(43) Date of publication of application: **11.12.2024**
(21) Application number: 23178234.3
(22) Date of filing: 08.06.2023
(51) Int. Cl.: C01B 32/05, C04B 35/52, C04B 35/532, C10B 53/00, C10C 3/00, C10C 3/06, C25C 3/12, H01M 4/133, H01M 4/583, H01M 4/62, H05B 7/085

(54) **IMPROVED THERMOPLASTIC CARBON PRECURSOR MATERIAL FOR THE MANUFACTURING OF BATTERY ELECTRODES**

(71) Applicant: Rain Carbon bv, 9060 Zelzate (BE); Rain Carbon Germany GmbH, 44579 Castrop-Rauxel (DE)
(72) Inventor: Spahr, Michael, 6500 Bellinzona (CH); Kuhnt, Christopher, 58452 Witten (DE); Claes, Joris, 9130 Verrebroek (BE); Denoo, Bram, 8310 Assebroek (BE)
(74) Representative: BiiP bv

(57) **Abstract**

The present invention is directed the use of a carbon precursor material in the manufacturing of battery electrodes is provided, said carbon precursor material comprising a petroleum-derived pitch product characterized by a Alcan coking value of between 44 and 80 wt% as measured according to ASTM D4715 and being a distillation product derived from petroleum-based raw material produced by the pyrolysis of petroleum streams, said petroleum-based raw material having a concentration of at least 40 wt.% by weight of asphaltenes as measured by Clay-Gel Absorption Chromatographic Method according to ASTM D2007. The present invention provides also a battery electrode comprising such converted carbon precursor material.

## Description

### TECHNICAL FIELD

The present invention generally relates to the use of a specific thermoplastic carbon precursor material in the manufacture of battery electrode materials used in the negative electrode of batteries, in particular in Li-lon batteries.

More specifically, the present invention relates to the use of said carbon precursor material in the manufacture of carbonaceous battery electrode materials as coating material for carbon-coated particles, or for binding and aggregating primary particle grains to larger aggregates or to carbon-containing particle composites, or for embedding primary particles into a carbon matrix in which the primary particle grains are fully embedded.

In addition, the present invention relates to battery electrodes, in particular for Li-lon batteries, comprising said carbon precursor material in converted state.

### BACKGROUND

Traditionally, the hydrocarbon pitch material in coating, binding or impregnation processes for the manufacturing of carbonaceous battery electrode material powders used in battery cell electrodes particular in Li-lon batteries, is coal tar pitch. Further, in particular in aggregating fine graphite primary particles to isometrically shaped secondary particles that lead, compared to the typically platelet-shaped graphite particles, to advantageous structures of porous battery electrodes based on electrode particle assemblies, typically coal tar-based pitch is used as binder material in the aggregation process as it transforms at a high yield into electrochemically active carbon.

In addition, to increase the energy density of a battery cell, silicon, silicon oxide, or silicon alloy particles are often added to the negative battery electrode either directly mixed with the graphite particles in the electrode or in the form of a composite with graphite or carbon. Such silicon-based particles could be coated at the surface with a coal tar pitch-based film for a better compatibility with the battery electrolyte. In the form of a composite, the silicon is often aggregated or fully embedded in a coal tar pitch-based carbon matrix.

A problem however is that, although coal tar has always been sufficiently available as a by-product of the production of metallurgical coke used in the blast furnaces for steel production, recently, due to the lower demand for virgin iron, less metallurgical coke is produced and hence less coal tar is available. Higher iron or steel scrap recycling using electric arc furnaces is contributing to this trend. In addition, steel production is moving away from high CO₂ emitting manufacturing processes like blast furnaces using metallurgical coal as reduction medium towards direct reduction of iron ore with hydrogen being another reason for the expected decline of the coal tar availability.

Another drawback of coal tar pitch binder is the rather high amount of (ca. 10 000 ppm in the typical viscosity range) of benzo(a)pyrene (B[a]P) which is classified as carcinogenic. On top of the B[a]P content also some other polyaromatic constituents are considered relevant as hazardous to health and environment. In general, the 16 EPA-PAH can be used to calculate a toxicity indicator value for these polyaromatic compounds.

Another drawback of coal tar pitch binder is the rather high amount of sulfur impurities being considered as a critical element impacting the electrochemical performance of the carbonaceous electrode. This is especially an issue if the carbon precursor is carbonized at relatively low temperatures but not graphitized as the sulfur volatiles typically are released from the carbon above 1600 °C.

In an attempt to produce an alternative pitch that contains less benzo[a]pyrene than coal tar pitch and is ensuring future security of supply, petroleum-derived pitch has been considered.

However, conventionally used petroleum-derived pitch does not attain the same quality parameters of the manufactured carbon artefacts as coal tar pitch if used pure in the electrode production process. A first drawback is that it typically has a lower carbon yield than coal tar pitch.

In addition, existing industrial petroleum-based pitches can have flashpoints starting from 200°C (which is well below the typical flashpoints of coal tar pitch) and thus give rise to potential safety concerns in the battery electrode material fabrication process that can contain hot mixing processes at temperatures exceeding 200°C. This as well limits the extent to which petroleum pitches can be blended with coal tar pitch.

In summary, none of the prior art attempts have provided an alternative carbon precursor material to coal tar pitch that can be used in substantial volumes/blend ratios to reliably serve the battery industry with sufficient product volumes.

Therefore, it is a general objective of the present invention to provide the use of an alternative carbon precursor that allows an increased security of supply and meets the necessary requirements as a precursor for conductive carbon in the manufacturing of battery electrodes.

Another objective of the present invention is to provide an alternative carbon precursor for use in particle coating, binding, aggregating, or embedding, or impregnation processes resulting in similar carbon yields (or Alcan coking values), and similar processing and performance of battery electrodes, in particular for Li-ion batteries.

A further objective of the present invention is to provide an alternative carbon precursor for use in particle coating, binding, aggregating, or embedding, or impregnation processes in the manufacturing of battery electrodes, that has a lower B[a]P and 16 EPA-PAH sum content.

In particular it is the objective to provide the use of an alternative carbon precursor material in the manufacture of battery electrodes as coating material for carbon-coated particles, or for binding and aggregating primary particle grains to larger aggregates or to carbon-containing particle composites, or for embedding primary particles into a carbon matrix in which the primary particle grains are fully embedded.

In particular, it is an objective to provide the use of an alternative carbon precursor for aggregating and/or coating primary carbon particles to secondary particles, or for embedding primary particles in a carbon matrix, in the manufacturing of porous battery electrodes.

It also is a particular objective to provide an alternative carbon precursor for aggregating and/or coating silicon-based particles, or for embedding (nano-)silicon in a carbon matrix, in the manufacturing of battery electrodes.

### SUMMARY

In a first aspect of the present invention, the use of a carbon precursor material in the manufacturing of battery electrodes is provided, said carbon precursor material comprising a petroleum-derived pitch product characterized by a Alcan coking value of between 44 and 80 wt% as measured according to ASTM D4715 and being a distillation product derived from petroleum-based raw material produced by the pyrolysis of petroleum streams, said petroleum-based raw material having a concentration of at least 40% by weight of asphaltenes as measured by Clay-Gel Absorption Chromatographic Method according to ASTM D2007.

In a second aspect in accordance with the present invention, a battery electrode is provided comprising said carbon precursor material in converted state, and in particular a Li-ion battery electrode.

### DETAILED DESCRIPTION

In a first aspect in accordance with the present invention, the use of a carbon precursor material in the manufacturing of battery electrodes is provided, said carbon precursor material comprising a petroleum-derived pitch product characterized by a Alcan coking value of between 44 and 80 wt% as measured according to ASTM D4715 and being a distillation product derived from petroleum-based raw material produced by the pyrolysis of petroleum streams, said petroleum-based raw material having a concentration of at least 40% by weight of asphaltenes as measured by Clay-Gel Absorption Chromatographic Method according to ASTM D2007.

As it is well known, asphaltenes are hydrocarbon solids which are insoluble in paraffinic solvents and have high melting points,and tend to form isotropic coke readily because of their highly condensed aromatic ring structure and high molecular weight. For example, asphaltenes may be pentane or heptane insolubles (cfr eg. EP0072243B1).

SARA analysis is a commonly used method for measuring saturates, asphaltenes, resins, aromatics in heavy crude oil, distillates and feedstocks. SARA analysis methods other than Clay-Gel (ASTM D-2007) may be TLC/FID following IP-469, or IP-143 followed by preparative HPLC (IP-368).

Further, the amounts of asphaltenes as mentioned throughout this text may include loss as defined in ASTM D-2007.

The high Alcan coking value of the carbon precursor material for use in the present invention allows to form a carbon at high yield which limits the amount of volatile matter formed in the carbonization process. A high amount of volatile matter gives rise to a porous carbon that would cause a high BET specific surface area (BET SSA). The high aromatic content like condensed aromatic rings is also required for the ideal carbon morphology of the dense coating layer that is formed at the particle surface. In this way a homogeneous coating and complete surface coverage at a thin layer thickness is achieved with a low amount of carbon and carbon precursor.

In particular with regards to the formation of a carbon matrix in which primary particles are embedded, the high Alcan coking value leads to a dense carbon matrix with limited or no porosity.

The thermoplastic carbon precursor material as used in the present invention may show high carbon yield combined with high flashpoint and low viscosity in the molten state combined with low B[a]P content. Further, it may show low quinoline insoluble content below 1 % by weight indicating a low amount of metal particle and solid carbon particle impurities like mesophase carbon and coke particles as well as a sulfur level below 2500 ppm. In addition, it may show a toluene insoluble content being suitable for particle coating processes (i.e. typically < 50 %), and good milling properties for dry particle coating processes. It may also demonstrate high flashpoints and low viscosity for safe and efficient mixing with powders in binding and coating processes while being environmentally friendly due to low B[a]P concentrations and/or an improved toxicity indicator. (Remark: there could be a sweet spot here: on one side we need high carbon yield of the carbon precursor to produce significant amount of low porosity carbon. At the same time some of the heavier volatile matters contribute to the binding properties in the same way as the lower viscosity of the carbon precursors with lower Mettler softening points have a positive effect on the binding properties. An ideal carbon precursor for binding therefore would have constituents providing the dense carbon matrix (typically high melting constituents), some low melting constituents providing a low viscosity and some heavy volatiles providing some additional binding effect).

The high flashpoints and low viscosities in the molten state may make the carbon precursor material also suitable for direct coating in liquid state. In this case the freshly produced carbon precursor material may be sprayed directly in the particles being fluidized by an intensive mixer or fluidized bed to be coated.. The freshly produced liquid carbon precursor may also be directly used for particle binding and aggregation. In this case the hot liquid precursor is directly sprayed onto the particles being treated by high shear forces in a heated mixer to be aggregated.

The carbon precursor material as used in the present invention has good impregnation and wetting properties indicated by a low viscosity at high shear stress above the Mettler softening point and a fast recovery of the viscosity when the shear stress is released. The strong thixotropic character of the carbon precursor in the molten state is different to a coal tar pitch precursor that is known to show Newtonian rheology (see Harry Marsh, in: Introduction in Carbon Science). The thixotropic melt viscosity in combination with a high number of aromatic constituents characterized by the asphaltenes and resin content characterized by the SARA method allows an ideal wetting and impregnation of the particle surface and during the heat treatment give rise to a dense carbon morphology that is graphitizable.

In an embodiment of the present invention, the use of the carbon precursor material as described throughout this text is provided for coating particles of electrode material for the manufacturing of battery electrodes. Particles to be coated may be all types of carbon like graphite, soft and hard carbon, carbon black, carbon nanotubes, graphene but also other electrochemically active metals or metal alloys based on silicon, tin, or aluminum as well as silicon oxide and tin oxide, thereby obtaining carbonaceous powdered materials or powder composites.

In a particular embodiment, the use of the carbon precursor material as described throughout this text is provided to bind primary particles to form secondary particle aggregates used as electrode materials in battery electrodes. Due to the composition of the carbon precursor characterized by a high asphaltene level the carbon precursor transforms into a carbon at high carbon yield. The soft carbon formed can be crystallized at high treatment temperatures and eventually graphitized at temperatures above 2000°C. The product has a rheology in the molten state characterized by a high viscosity recovery after shear stress and suitable to build the secondary particle aggregates required by the technical application.

In another particular objective of the present invention, the use of the carbon precursor material as described throughout this text is provided for embedding primary particles into a carbon matrix in which the primary particle grains are fully embedded.

The nature of the primary particles to be aggregated or to be embedded may be all types of carbon like graphite, soft and hard carbon, carbon black, carbon nanotubes, graphene but also other electrochemically active metals or metal alloys based on silicon, tin, or aluminum as well as silicon oxide and tin oxide.

In addition, a carbon precursor material according to the present invention may be applied in significantly higher blend ratios with coal tar pitch than conventional petroleum-derived pitches, thereby meeting the objective to have an increased security of supply of a high-quality carbon precursor to the downstream users.

In accordance with the present invention, the petroleum-derived pitch product is characterized by a Alcan coking value of between 44 and 80 wt% as measured according to ASTM D4715 and being a distillation product derived from petroleum-based raw material produced by the pyrolysis of petroleum streams, said petroleum-based raw material having a concentration of at least 40% by weight of asphaltenes as measured by Clay-Gel Absorption Chromatographic Method according to ASTM D2007. More particularly, the petroleum-derived pitch product is a distillation residue derived from said petroleum-based raw material having a concentration of at least 40% by weight of asphaltenes.

In a preferred embodiment, the petroleum-based raw material produced by the pyrolysis of petroleum streams may have a concentration of at least 50% by weight of asphaltenes as measured by Clay-Gel Absorption Chromatographic Method according to ASTM D2007. These amounts of asphaltenes as mentioned above may include loss as defined in ASTM D2007.

Further, the petroleum-based raw material may be characterized by a concentration of resins of between 20% and 35% by weight, and preferably between 25% and 35% by weight as measured by Clay-Gel Absorption Chromatographic Method according to ASTM D2007.

In an embodiment of the present invention, the petroleum derived pitch product may contain at least 80% by weight, or least 85%, or at least 90%, or at least 95% by weight of asphaltenes measured by SARA analysis (Clay-Gel Absorption Chromatographic Method according to ASTM D2007). Further, it may have a resin concentration between 1 and 20% weight as measured by SARA analysis. Further, the amounts of asphaltenes as mentioned above may include loss as defined in ASTM D2007. Without being bound by any theory, starting from petroleum-based raw material with at least 40% by weight of asphaltenes and concentrating the asphaltenes to a concentration above 80% weight may contribute to the high Alcan coking value of the carbon precursor as used in the present invention. This may ensure a dense (low porosity) homogeneous carbon coating of the electrode material surface lowering the surface reactivity towards the electrolyte as well the surface area of the electrode material being in direct contact with the battery electrolyte. In addition, the morphology carbon layer formed at the particle surface in a subsequent carbonization of the carbon precursor ensures a good electrical conductivity and particle contact of the electrode material in the battery cell electrode.

In an embodiment of the present invention, the carbon precursor material may have a Mettler softening point between 130 and 300°C , preferably between 150°C and 280°C, and more preferably between 160°C and 260°C . In the light of particle coating applications, a Mettler softening point above 120°C may allow the carbon precursor to be milled to fine particles used in a dry particle coating process.

Further, the carbon precursor material may have an Alcan coking value of at least 44 % , or at least 55 % , and preferably above 60 % , or more preferably above 70 % by weight, resulting in a lower porosity of the carbon artefact after carbonization/graphitization and so leading to better properties in the subsequent use as electrode material in battery cells.

According to the present invention, the petroleum-derived pitch product may have a B(a)P content of lower than 1500 mg/kg, or lower than 1200 mg/kg, and preferably lower than 1000 mg/kg, and/or a 16 EPA-PAH Sum of less than 5% (m/m) according to US Environmental Protection Agency (EPA).

In an embodiment of the present invention, the carbon precursor material may have an Alcan coking value of at least 44% , a B[a]P content lower than 1500 mg/kg, or lower than 1200 mg/kg, and preferably lower than 1000 mg/kg and a Mettler softening point being higher than 150°C.

In another embodiment, the carbon precursor material may have an Alcan coking value of at least 70% , a B[a]P content lower than 250 mg/kg and a Mettler softening point above 240°C .

As the carbon precursor material is converted into carbon during the carbonization process being a thermal treatment in an inert gas atmosphere or vacuum, a sufficiently high coke yield allows avoiding a high porosity in the resulting graphite particles due to fewer volatiles formed during the carbonization process. Lower amount of volatiles in the exhaust gas of the furnace results also in an easier management of the exhaust gas emissions. Still some heavier volatile constituents contribute to the binding effect of the carbon precursor as well as a low viscosity of the carbon precursor in the molten state. With the particle binding a dense carbon layer may be formed at the surface of the aggregated particle or the carbon matrix in which the primary particles are embedded with a morphology that is advantageous for the formation of an efficient solid electrolyte interphase at the electrode particle surface, i.e. the passivation layer formed from electrolyte decomposition products formed during the electrochemical reduction of the negative electrode at the electrochemically active electrode surface area being in contact with the electrolyte during the charging process of the cell. In the case of a liquid electrolyte, this passivation layer is formed at the electrochemically active electrode surface area being wetted by the liquid electrolyte. The nature and quality of the carbon film formed at the particle surface positively influences the solid electrolyte interphase and therefore several battery cell parameters like the specific charge losses, the current rate discharge and charge performance, the charge/discharge cycling stability, and safety performance of the battery cell.

The thixotropic behavior of the carbon precursor material as used in the present invention with a fast recovery rate of the melt viscosity measured for the molten precursor above the Mettler softening point facilitates the handling and processing with a low viscosity at high shear forces introduced during the particle processing like mixing of the primary particles with the molten carbon precursor and a fast recovery of the viscosity after the shear stress is released. In particular, for the carbon precursor material consisting solely of the petroleum-derived pitch product, the dynamic viscosity at 40°C above the Mettler softening point measured at a shear rate of 10 1/s may be in the range of 14000 and 35000 mPa s and with a viscosity recovery after 60s above 90%. In case the carbon precursor material comprises an amount of coal tar-based pitch as well, such blend may have a viscosity up to 50000, or even up to 60000 mPa s..

The above low melt viscosities enhance the binding effect as well as the wetting and impregnation of the aggregated particle surface, such that a thin dense film of carbon being homogeneously distributed at the particle surface is achieved. Enhanced surface wetting and impregnation results in good coverage of the geometrical particle surface but also of the micro- and mesopores as well as the roughness that typically can be found at the particle surface.

The carbon precursor material of the present invention may comprise 25 to 75% by weight, and preferably 50 to 75% by weight, of said petroleum-derived pitch product, and a coal tar-based pitch. Alternatively, instead of coal-tar based pitch or in combination, phenol resins, or bio-based constituents like lignin-based materials, or tall oil-based materials may be used as well.

In an even more preferred embodiment of the present invention, the carbon precursor material may consist solely of said petroleum-derived pitch product, i.e. containing 100% by weight petroleum-derived pitch product.
Below tables illustrate examples of carbon precursor material formulations in accordance with an embodiment of the present invention, namely table 1 provides examples 1-4 of the carbon precursor material containing only the petroleum-derived pitch product, and example 5 of the carbon precursor material containing 50% coal tar-based pitch.

**TABLE 1:**

| | | Example 1 | Example 2 | Example 3 | Example 4 | Example 5 |
|---|---|---|---|---|---|---|
| Content petroleum based material [%] | | 100 | 100 | 100 | 100 | 50 |
| SPM [°C] | | 270.3 | 249 | 180 | 151 | 240 |
| Alcan [%(m/m)] | | 75.7 | 70.8 | 58.8 | 44.2 | 76.5 |
| QI [%(m/m)] | | 0.3 | 0.1 | 0.5 | <0.1 | 6 |
| TI [%(m/m)] | | 43.5 | 25.7 | 18.8 | 6.6 | 36,5 |
| β-resin [%(m/m)] | | 43.2 | 26.6 | 18.3 | 6.6 | 30.5 |
| Dynamic viscosity [mPas] | | | | | | |
| 40 °C above the Mettler softening point | | | | | | |
| measured at a shear rate of 10 1/s | | 25498 | 31248 | 24406 | 17275 | 50000 |
| measured at a shear rate of 1000 1/s | | | | | | |
| Viscosity recovery after 60 seconds 40 °C above SPM | | 98 | 98 | 95 | 94 | 68 |
| 16 EPA PAH [ppm] | | | | | | |
| | Benzo[a]pyrene | 124 | 108 | 931 | 976 | 175 |
| | Sum 16 EPA PAH [%(m/m)] | 0.18 | 0.16 | 0.99 | 1.99 | 0.25 |
| SARA [%(m/m)] | | | | | | |
| *Product* | Saturates | 0.0 | 0.0 | 0.0 | 0.0 | 0.0 |
| | Aromatics | 0.0 | 0.0 | 1.2 | 2.2 | 0.0 |
| | Resins | 0.3 | 0.7 | 3.7 | 14.2 | 0.5 |
| | Asphaltenes | 99.7 | 99.3 | 95.1 | 83.6 | 99.5 |
| SARA [%(m/m)] | | | | | | |
| *Feed* | Saturates | 1.3 | 0.8 | 0.6 | 2.1 | |
| | Aromatics | 12 | 15.1 | 10 | 20.2 | |
| | Resins | 22.2 | 28.6 | 31.1 | 22.9 | |
| | Asphaltenes | 63.8 | 55.6 | 58.3 | 54.9 | |

Below table provides an overview of analytical procedures of the product parameters as used in this text:

| **Analysis** | **Unit** | **Norm/Method** |
|---|---|---|
| Mettler softening point, | °C | ASTM D3104 |
| Quinoline insolubles, QI | % (by weight) | DIN 51921 |
| Toluene insolubles, TI | % (by weight) | DIN 51906 |
| Beta-resins | % (by weight) | Calculation TI-QI |
| Carbon yield (coking value), ALCAN | % (by weight) | ASTM D4715 |
| | | |
| Benzo[a]pyrene content | ppm | ISO 18287 |
| 16 EPA-PAH sum | % (by weight) | ISO 18287 |
| Flash point (small scale equilibrium) | °C | ISO 3679 |
| Dynamic viscosity | mPa.s | ASTM D5018 |
| at temperatures of 160 °C - 300 °C | | |
| Viscosity recovery after 60 seconds (180 °C) | % | Internal method according to DIN91143-2 |
| SARA (starting material) | | ASTM D2007 |
| -asphaltenes | % (by weight) | |
| -resins | % (by weight) | |
| -aromatics | % (by weight) | |
| -saturates | % (by weight) | |
| SARA (final pitch product) | | ASTM D2007 |
| -asphaltenes | % (by weight) | |
| -resins | % (by weight) | |
| -aromatics | % (by weight) | |
| -saturates | % (by weight) | |

## Claims

1. Use of a thermoplastic carbon precursor material in the manufacturing of battery electrode materials is provided, said carbon precursor material comprising a petroleum-derived pitch product **characterized by** a Alcan coking value of between 44 and 80 wt.% as measured according to ASTM D4715 and being a distillation product derived from petroleum-based raw material produced by the pyrolysis of petroleum streams, said petroleum-based raw material having a concentration of at least 40% by weight of asphaltenes and loss as measured by Clay-Gel Absorption Chromatographic Method according to ASTM D2007.

2. The use of claim 1 wherein the petroleum-derived pitch product having a Mettler softening point between 130°C and 300°C .

3. The use of claim 1 wherein the petroleum-derived pitch product having a Alcan coking value of between 50 and 76 wt.% .

4. The use of claim 1 wherein the petroleum-derived pitch product having a concentration of at least 80% asphaltenes (as measured by Clay-Gel Absorption Chromatographic Method according to ASTM D2007).

5. The use of claim 1 wherein the petroleum-derived pitch product having a resin content below 20% (as measured by Clay-Gel Absorption Chromatographic Method according to ASTM D2007).

6. The use of claim 1 wherein the petroleum-derived pitch product, having a B(a)P content of less than 1500 and/or a 16 EPA-PAH Sum of less than 5% (m/m) according to US Environmental Protection Agency (EPA).

7. The use according to any of the above claims wherein the petroleum-derived pitch product having an Alcan coking value of at least 44 wt.% , a B[a]P content lower than 1500 mg/kg and a Mettler softening point of above 150°C.

8. The use according to any of the above claims wherein the petroleum-derived pitch product having a Alcan coking value of at least 70% , a B[a]P content lower than 250 mg/kg and a Mettler softening point above 240°C .

9. The use according to any of the above claims wherein said petroleum-based raw material is further characterized as having a concentration of asphaltenes of at least 50 % by weight and a resins concentration of at least 20% by weight as measured by SARA analysis.

10. The use according to any of claims 1 to 9, wherein the carbon precursor material consists solely of said petroleum-derived pitch product.

11. The use according to any of claims 1 to 9, wherein the carbon precursor material comprising 25 to 75 % by weight of said petroleum-derived pitch product, and a coal tar-based pitch.

12. The use according to any of claims 1 to 11, for binding primary particles to form secondary particle aggregates.

13. The use according to any of claims 1 to 11, for embedding primary particles into a carbon matrix in which the primary particles are fully embedded.

14. A battery electrode comprising a converted carbon precursor material as used in any of claims 1 to 13.
